# DEMANDE DE BREVET EUROPEEN

(11) **EP 2 913 538 A1**
(43) Date de publication de la demande: **02.09.2015**
(21) Numéro de dépôt: 14156727.1
(22) Date de dépôt: 26.02.2014
(51) Int. Cl.: F16B 13/08, F16B 37/02

(54) **Cheville à bascule perfectionnée et organe de serrage pour ladite cheville**

(71) Demandeur: SARL François Inglese, 43000 Le Puy en Velay (FR)
(72) Inventeur: Inglese, François, 43120 Monistrol sur Loire (FR)
(74) Mandataire: Cabinet Laurent & Charras

(57) **Abrégé**

L'invention concerne une cheville à bascule comprenant un organe de serrage (8), permettant le pinçage de la paroi (1) contre la traverse (4) pour assurer un ancrage ferme de la cheville (2), se présentant sous la forme d'un découpage de tôle (8a) de dimensions supérieures à celles du trou (1a) de la paroi (1), et comprenant un orifice (9) pour l'insertion autour de la tige filetée (3), ledit orifice (9) comprend au moins deux encoches (10) ménagées sur sa périphérie et diamétralement opposées, de sorte à définir deux parties (11) autour dudit orifice (9), lesdites deux parties (11) sont inclinées par rapport à l'organe de serrage (8) pour la formation d'au moins un pas de taraudage, et ledit organe de serrage (8) comprend deux parties repliées (12) à angle droit du côté de l'extrémité distale (3a) de la tige (3), et symétriques l'une par rapport à l'autre par rapport au centre de l'orifice (9), de manière à former deux ailettes d'appui et de manipulation pour le vissage dudit organe de serrage (8).

## Description

### DOMAINE TECHNIQUE

La présente invention concerne une cheville à bascule pour la suspension d'un objet en dessous d'une paroi horizontale, ainsi qu'un organe de serrage pour ladite cheville.

### ART ANTERIEUR

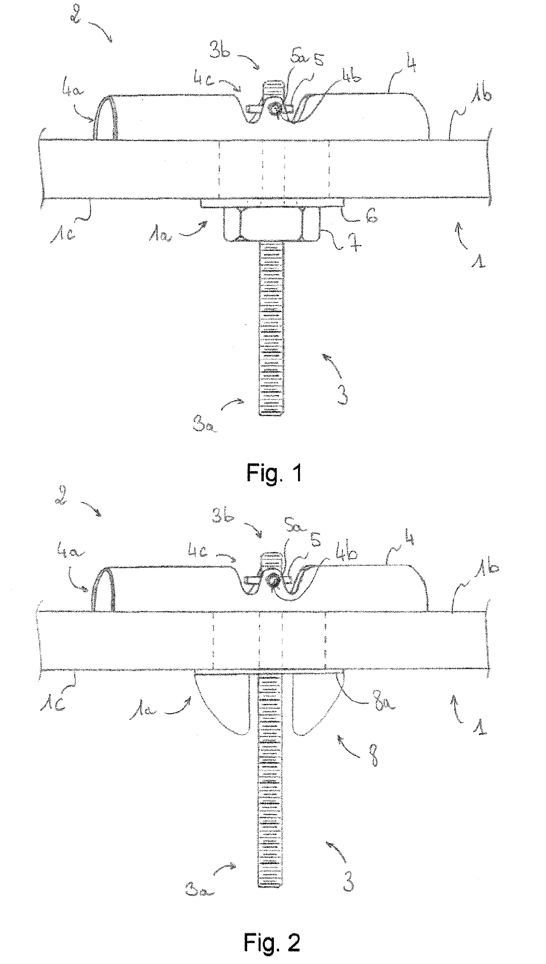

En référence à la figure 1, il est bien connu d'utiliser, pour la suspension d'un objet (non représenté) en dessous d'une paroi horizontale (1), des chevilles à bascule (2) du type comprenant :
- une tige filetée (3) s'étendant selon un axe longitudinal, destinée à traverser la paroi horizontale (1) par un trou (1a) de celle-ci et présentant une extrémité distale (3a) et une extrémité proximale (3b),
- une traverse (4), présentant en son centre un élément formant pivot (5) apte à être vissé à l'extrémité proximale (3b) de la tige filetée (3), afin de pouvoir occuper une orientation longitudinale dans laquelle ladite traverse (4) se trouve dans le prolongement de la tige (3) pour traverser le trou (1a) dans la paroi (1), et une orientation transversale, dans laquelle ladite traverse (4) forme une saillie transversalement de part et d'autre de la tige (3) pour prendre appui longitudinalement sur la paroi (1), d'un premier côté (1b) de celle-ci, de part et d'autre du trou (1a),
- une rondelle intermédiaire d'appui (6) insérée autour de la tige filetée (3) par son extrémité distale (3a) au niveau du deuxième côté (1c) de la paroi (1), et
- un écrou de serrage (7) vissé à l'extrémité distale (3a) de la tige (3) jusqu'à la rondelle d'appui (6) pour pincer la paroi (1) contre la traverse (4) assurant un ancrage ferme de la cheville à bascule (2).

De telles chevilles permettent une suspension optimale d'un objet en dessous d'une paroi horizontale dont on n'a pas accès à l'autre côté de celle-ci. Cependant, ces chevilles présentent plusieurs inconvénients inhérents à leur structure.

En effet, lors de l'utilisation par un opérateur, celui-ci nécessite l'utilisation d'un outil spécifique telle qu'une clé anglaise par exemple pour le vissage de l'écrou. La rondelle, agencée entre la paroi et l'écrou est laissée libre et repose sur ledit écrou pendant toute la phase de vissage ce qui peut gêner l'opérateur.

Au surplus l'utilisation est peu pratique, car il faut manipuler la clé à l'horizontal et en hauteur, en étant proche de la paroi horizontale tel qu'un plafond par exemple.

### EXPOSE DE L'INVENTION

Le problème que se propose de résoudre l'invention est donc de fournir une cheville à bascule d'utilisation simple et pratique à manipuler et à mettre en place, et dont le coût de revient est réduit par rapport aux chevilles de l'état de la technique.

Pour résoudre les problèmes précités, il a été mis au point une cheville à bascule du type comprenant :
- une tige filetée s'étendant selon un axe longitudinal, destinée à traverser la paroi horizontale par un trou de celle-ci et présentant une extrémité distale et une extrémité proximale,
- une traverse, présentant en son centre un élément formant pivot apte à être vissé à l'extrémité proximale de la tige filetée, afin de pouvoir occuper une orientation longitudinale dans laquelle ladite traverse se trouve dans le prolongement de la tige pour traverser le trou dans la paroi, et une orientation transversale, dans laquelle ladite traverse forme une saillie transversalement de part et d'autre de la tige pour prendre appui longitudinalement sur la paroi, d'un premier côté de celle-ci, de part et d'autre du trou.

Selon l'invention, la cheville à bascule comprend un organe de serrage, permettant le pinçage de la paroi contre la traverse pour assurer un ancrage ferme de la cheville, se présentant sous la forme d'un découpage de tôle de dimensions supérieures à celles du trou de la paroi, et comprenant un orifice pour l'insertion autour de la tige filetée, ledit orifice comprend au moins deux encoches ménagées sur sa périphérie et diamétralement opposées de sorte à définir deux parties autour dudit orifice, lesdites deux parties sont inclinées par rapport à l'organe de serrage pour la formation d'au moins un pas de taraudage, et ledit organe de serrage comprend deux parties repliées à angle droit du côté de l'extrémité distale de la tige, et symétriques l'une par rapport à l'autre par rapport au centre de l'orifice, de manière à former deux ailettes d'appui et de manipulation pour le vissage dudit organe de serrage.

De cette manière, l'organe de serrage selon l'invention est destiné à remplacer la rondelle et l'écrou des chevilles à bascule de l'état de la technique. Ainsi, l'opérateur, après avoir positionné de manière adéquate la cheville dans le trou de la paroi, celui-ci visse l'organe de serrage autour de la tige filetée au niveau de son extrémité distale. Les parois inclinées autour de l'orifice forment un pas de taraudage et permettent un vissage optimal dudit organe de serrage. Les deux ailettes repliées à angle droit permettent à l'opérateur de saisir ledit organe de serrage et de le visser à la main. L'organe de serrage est simple et économique à fabriquer. L'utilisation de la cheville à bascule selon l'invention est simplifiée.

De préférence, l'organe de serrage est circulaire et de diamètre supérieur au diamètre du trou de la paroi.

Avantageusement, l'orifice comprend quatre encoches ménagées sur sa périphérie et régulièrement réparties de manière à définir quatre parties autour dudit orifice, lesquelles sont inclinées deux à deux, de part et d'autre dudit organe de serrage, pour la formation d'au moins un pas de taraudage.

Avantageusement et pour renforcer l'organe de serrage, celui-ci comprend une nervure centrale circulaire agencée de manière concentrique autour de l'orifice, ladite nervure circulaire se prolonge par quatre nervures jusqu'à la périphérie dudit organe de serrage, lesdites quatre nervures étant régulièrement réparties autour de la périphérie de la nervure centrale circulaire.

L'invention concerne également l'organe de serrage en tant que tel comprenant les caractéristiques techniques telles que précitées.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective illustrant une cheville à bascule de l'art antérieur, munie d'une rondelle intermédiaire d'appui et d'un écrou de serrage ;
- la figure 2 est une représentation schématique en perspective illustrant la cheville à bascule selon l'invention ;
- la figure 3 est une représentation schématique illustrant une vue de face de l'organe de serrage selon l'invention ;
- la figure 4 est une représentation schématique similaire à celle de la figure 3, illustrant une vue de côté dudit organe de serrage.

### EXPOSE DETAILLE DE L'INVENTION

En référence à la figure 2 qui illustre une cheville à bascule (2) selon l'invention, celle-ci comprend d'une manière connue, une tige filetée (3) et une traverse (4).

La tige filetée (3) s'étend selon un axe longitudinal et présente une extrémité distale (3a) et une extrémité proximale (3b).

La traverse (4) se présente sous la forme d'un profilé métallique rectiligne de section transversale en forme de C définissant une partie interne (4a) entre les deux branches du C. Cette traverse (4) comprend deux orifices (4b) traversant de part en part chacune desdites branches de la forme en C de ladite traverse (4), au niveau du milieu de sa longueur, et selon un axe transversal. Une lumière (4c) est ménagée sur la paroi de la traverse (4) entre les deux branches du C, et au niveau du milieu de la longueur de ladite traverse (4). En d'autre terme la lumière (4c) se trouve ménagée sur la paroi de la traverse (4) entre les deux orifices (4b).

La traverse (4) comprend de plus un élément formant pivot (5) monté en son centre. Cet élément formant pivot (5) se présente sous la forme d'une pièce plate comprenant un orifice traversant taraudé et deux doigts (5a) faisant saillies de la pièce dans des directions diamétralement opposées par rapport à l'orifice.

Lesdits deux orifices (4b) de la traverse (4) sont destinés à recevoir l'élément formant pivot (5). En d'autres termes, les doigts de l'élément formant pivot (5) sont montés à l'intérieur desdits orifices (4b) et sont libres en rotation, de manière à permettre la rotation de l'élément formant pivot (5) autour de l'axe desdits orifices (4b).

L'orifice taraudé de l'élément formant pivot (5) permet la réception de la tige filetée (3). Ledit élément formant pivot (5) est donc vissé à l'extrémité proximale (3b) de la tige filetée (3). La lumière (4c) de la traverse (4) permet de laisser passer la tige filetée (3) au travers de ladite traverse (4) en fonction de la profondeur de vissage de l'élément formant pivot (5).

De cette manière la traverse (4) est apte à occuper une orientation longitudinale dans laquelle ladite traverse (4) se trouve dans le prolongement de la tige (3), la tige (3) étant reçue dans la partie interne (4a) de la traverse (4), et, une orientation transversale, dans laquelle ladite traverse (4) forme une saillie transversalement de part et d'autre de la tige (3)

La cheville à bascule (2) est destinée à permettre la suspension d'un objet en dessous d'une paroi horizontale (1) dans laquelle est ménagé un trou (1a). Toujours d'une manière connue, la tige (3) et la traverse (4) occupant une orientation longitudinale dans laquelle elle est dans le prolongement de ladite tige (3), sont destinées à traverser le trou (1a) de la paroi (1). La traverse (4) est ensuite apte à occuper une orientation transversale, dans laquelle ladite traverse (4) forme une saillie transversalement de part et d'autre de la tige (3) pour prendre appui longitudinalement sur la paroi (1), d'un premier côté de celle-ci, de part et d'autre du trou (1a).

Selon l'invention, la cheville à bascule (2) comprend un organe de serrage (8), permettant le pinçage de la paroi (1) contre la traverse (4) pour assurer un ancrage ferme de la cheville à bascule (2).

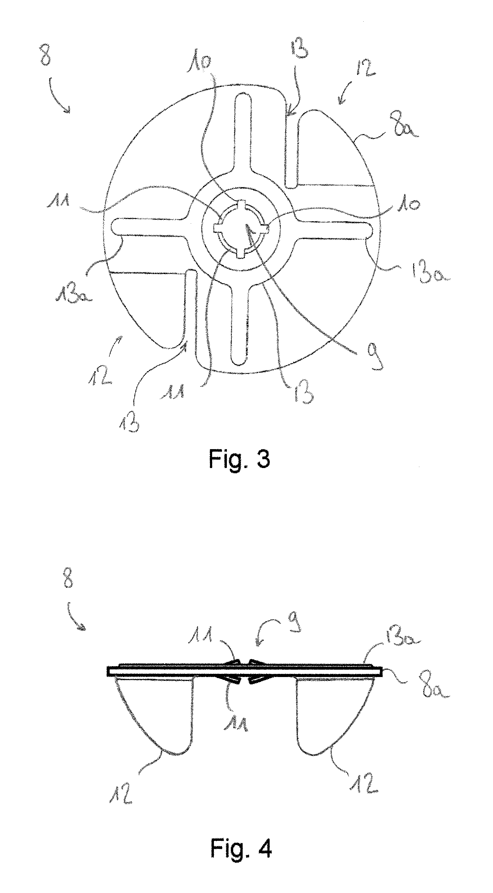

En référence aux figures 3 et 4, ledit organe de serrage (8) se présente sous la forme d'un découpage de tôle (8a), notamment circulaire de diamètre supérieur à celui du trou (1a) de la paroi (1). L'organe de serrage (8) comprend une épaisseur relativement fine notamment inférieure à un millimètre et comprend un orifice (9) pour l'insertion autour de la tige filetée (3). Ledit orifice (9) est ménagé au centre de l'organe de serrage (8) et est de diamètre sensiblement égal au diamètre de la tige filetée (3). Ledit orifice (9) comprend au moins deux encoches et préférablement quatre encoches (10) ménagées sur sa périphérie et régulièrement réparties sur celle-ci, de sorte à définir au moins deux parties et de préférence quatre parties (11) autour dudit orifice (9). Lesdites au moins deux parties et de préférence quatre parties (11) sont inclinées, deux à deux, par rapport à l'organe de serrage (8) pour la formation d'au moins un pas de taraudage. Lesdites au moins deux parties et de préférence les quatre parties peuvent être inclinées de part et d'autre de l'organe de serrage.

L'organe de serrage (8) comprend de plus deux parties repliées (12) de manière à former deux ailettes d'appui et de manipulation pour le vissage dudit organe de serrage (8). Ces parties repliées (12) sont réalisées par le découpage de deux entailles (13) dans ledit organe de serrage (8) et par le pliage à angle droit de l'une des deux parties (12) définies de part et d'autre de ladite entaille (13). Les deux entailles (13) sont symétriques l'une par rapport à l'autre par rapport au centre de l'orifice (9), afin de permettre une meilleure prise des parties repliées (12) et un meilleur transfert d'effort pour le vissage.

Pour renforcer l'organe de serrage (8), celui-ci comprend en outre une nervure centrale circulaire (13) agencée de manière concentrique autour de l'orifice (9). La nervure circulaire (13) se prolonge par quatre nervures (13a) jusqu'à la périphérie dudit organe de serrage (8). Les quatre nervures (13a) sont régulièrement réparties autour de la périphérie de la nervure centrale circulaire (13) de manière à former une croix. Ces nervures (13, 13a) sont notamment réalisées par emboutissage.

Ainsi ledit organe de serrage (8) sous la forme d'un découpage de tôle (8a) peut être vissé à l'extrémité distale (3a) de la tige filetée (3) jusqu'au contact de la paroi horizontale (1), lorsque la cheville à bascule (2) est en positionnée dans le trou (1a) de ladite paroi (1). Le serrage dudit organe de serrage (8) permet de pincer la paroi (1) contre la traverse (4) pour assurer un ancrage ferme de la cheville à bascule (2).

Ledit organe de serrage (8) peut être vissé facilement à la main par un opérateur par l'intermédiaire des deux ailettes d'appui et de manipulation (12).

Il ressort de ce qui précède qu'une cheville à bascule (2) muni d'un tel organe de serrage (8) est d'utilisation simple et pratique, car l'opérateur ne subit aucune gêne pour le vissage dudit organe de serrage et ne nécessite l'utilisation d'aucun outil spécifique. De plus, le coût de revient d'une telle cheville à bascule (2) est réduit par rapport aux chevilles de l'état de la technique car le prix de revient de l'organe de serrage (8) sous la forme d'un découpage de tôle (8a) est nettement plus faible que le prix d'une rondelle et d'un écrou. L'invention donne entière satisfaction.

## Revendications

1. Cheville à bascule (2) du type comprenant :
- une tige filetée (3) s'étendant selon un axe longitudinal, destinée à traverser la paroi horizontale (1) par un trou (1a) de celle-ci et présentant une extrémité distale (3a) et une extrémité proximale (3b),
- une traverse (4), présentant en son centre un élément formant pivot (5) apte à être vissé à l'extrémité proximale (3b) de la tige filetée (3), afin de pouvoir occuper une orientation longitudinale dans laquelle ladite traverse (4) se trouve dans le prolongement de la tige (3) pour traverser le trou (1a) dans la paroi (1), et une orientation transversale, dans laquelle ladite traverse (4) forme une saillie transversalement de part et d'autre de la tige (3) pour prendre appui longitudinalement sur la paroi (1), d'un premier côté (1b) de celle-ci, de part et d'autre du trou (1a),
***caractérisée en ce qu'**elle* comprend un organe de serrage (8), permettant le pinçage de la paroi (1) contre la traverse (4) pour assurer un ancrage ferme de la cheville (2), se présentant sous la forme d'un découpage de tôle (8a) de dimensions supérieures à celles du trou (1a) de la paroi (1), et comprenant un orifice (9) pour l'insertion autour de la tige filetée (3), ledit orifice (9) comprend au moins deux encoches (10) ménagées sur sa périphérie et diamétralement opposées, de sorte à définir deux parties (11) autour dudit orifice (9), lesdites deux parties (11) sont inclinées par rapport à l'organe de serrage (8) pour la formation d'au moins un pas de taraudage, et ledit organe de serrage (8) comprend deux parties repliées (12) à angle droit du côté de l'extrémité distale (3a) de la tige (3), et symétriques l'une par rapport à l'autre par rapport au centre de l'orifice (9), de manière à former deux ailettes d'appui et de manipulation pour le vissage dudit organe de serrage (8).

2. Cheville à bascule (2) selon la revendication **1, *caractérisée en ce que*** l'organe de serrage (8) est circulaire et de diamètre supérieur au diamètre du trou (1a) de la paroi (1).

3. Cheville à bascule (2) selon la revendication 1 ***caractérisée en ce que*** lesdites deux parties sont inclinées de part et d'autre de l'organe de serrage (8).

4. Cheville à bascule (2) selon la revendication 1, ***caractérisée en ce que*** l'orifice (9) comprend quatre encoches (10) ménagées sur sa périphérie et régulièrement réparties de manière à définir quatre parties (11) autour dudit orifice (9), lesquelles sont inclinées deux à deux, de part et d'autre dudit organe de serrage (8), pour la formation d'au moins un pas de taraudage.

5. Cheville à bascule (2) selon la revendication 1, ***caractérisée en ce que*** l'organe de serrage (8) comprend une nervure centrale circulaire (13) agencée de manière concentrique autour de l'orifice (9), ladite nervure circulaire (13) se prolonge par quatre nervures (13a) jusqu'à la périphérie dudit organe de serrage (8), lesdites quatre nervures (13a) sont régulièrement réparties autour de la périphérie de la nervure centrale circulaire (13).

6. Organe de serrage (8) pour cheville à bascule (2), ladite cheville comprenant :
- une tige filetée (3) s'étendant selon un axe longitudinal, destinée à traverser la paroi horizontale (1) par un trou (1a) de celle-ci et présentant une extrémité distale (3a) et une extrémité proximale (3b),
- une traverse (4), présentant en son centre un élément formant pivot (5) apte à être vissé à l'extrémité proximale (3b) de la tige filetée (3), afin de pouvoir occuper une orientation longitudinale dans laquelle ladite traverse (4) se trouve dans le prolongement de la tige (3) pour traverser le trou (1a) dans la paroi (1), et une orientation transversale, dans laquelle ladite traverse (4) forme une saillie transversalement de part et d'autre de la tige (3) pour prendre appui longitudinalement sur la paroi (1), d'un premier côté (1b) de celle-ci, de part et d'autre du trou (1a),
***caractérisé en ce qu'**il* se présente sous la forme d'un découpage de tôle (8a) de dimensions supérieures à celles du trou (1a) de la paroi (1), et comprenant un orifice (9) pour l'insertion autour de la tige filetée (3), ledit orifice (9) comprend au moins deux encoches (10) ménagées sur sa périphérie et diamétralement opposées, de sorte à définir deux parties (11) autour dudit orifice (9), lesdites deux parties (11) sont inclinées par rapport à l'organe de serrage pour la formation d'au moins un pas de taraudage, et ledit organe de serrage (8) comprend deux parties repliées (12) à angle droit du côté de l'extrémité distale (3a) de la tige (3), et symétriques l'une par rapport à l'autre par rapport au centre de l'orifice (9) de manière à former deux ailettes d'appui et de manipulation pour le vissage dudit organe de serrage (8).

7. Organe de serrage (8) selon la revendication 6 **caractérisé en ce que** lesdites deux parties (11) sont inclinées de part et d'autre de l'organe de serrage (8).
